(19) **Europäisches Patentamt / European Patent Office / Office européen des brevets**

(11) **EP 4 489 241 A1**

(12) **EUROPÄISCHE PATENTANMELDUNG**

(43) Veröffentlichungstag:
08.01.2025 Patentblatt 2025/02

(21) Anmeldenummer: 23183150.4

(22) Anmeldetag: 03.07.2023

(51) Internationale Patentklassifikation (IPC):
*H02H 3/05* (2006.01)     *H02H 7/26* (2006.01)
*H02J 1/12* (2006.01)     *H02H 3/087* (2006.01)

(52) Gemeinsame Patentklassifikation (CPC):
**H02H 3/05; H02H 7/266; H02H 7/268; H02J 1/12;**
H02H 3/087

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder:
• **Fraunhofer-Gesellschaft zur Förderung der angewandten Forschung e.V.**
**80686 München (DE)**
• **Friedrich-Alexander-Universität Erlangen-Nürnberg**
**91054 Erlangen (DE)**

(72) Erfinder:
• **GEHRING, Johannes**
**91058 Erlangen (DE)**
• **SCHWANNINGER, Raffael**
**90427 Nürnberg (DE)**
• **WUNDER, Bernd**
**91058 Erlangen (DE)**
• **KAISER, Julian**
**91058 Erlangen (DE)**

(74) Vertreter: **Pfitzner, Hannes et al**
**Schoppe, Zimmermann, Stöckeler Zinkler, Schenk & Partner mbB Patentanwälte**
**Radlkoferstraße 2**
**81373 München (DE)**

(54) **KURZSCHLUSSSTROMELEMENT**

(57) Kurzschlussstromelement (10) für ein Gleichspannungsnetz (20), das zumindest einen mit einem Sicherungsgerät (38a, 38b, 38c, 38d) abgesicherten Abzweig (30a, 30b, 30c, 30d) aufweist; wobei das Kurzschlussstromelement (10) eine Diode (12) sowie einen Energiespeicher (14) umfasst, wobei die Diode (12) so angeordnet ist, dass sie im Normalbetrieb des Gleichspannungsnetzes (20) sperrt, wobei der Energiespeicher (14) ausgebildet ist, eine Speicherspannung ($U_{Speicher}$) kleiner als die Netzspannung ($U_{Netz}$) des Gleichspannungsnetzes (20) bereitzustellen; wobei die Diode (12) ferner ausgebildet ist, in einem Störbetrieb des Gleichspannungsnetzes (20) einen Energiefluss aus dem Energiespeicher (14) in das Gleichspannungsnetz (20) und in den Abzweig (30a, 30b, 30c, 30d) freizugeben.

Fig. 2

EP 4 489 241 A1

**Beschreibung**

Ausführungsbeispiele der vorliegenden Erfindung beziehen sich auf ein Kurzschlussstromelement sowie ein entsprechendes Verfahren. Weitere Ausführungsbeispiele beziehen sich auf ein Gleichspannungsnetz. Ein besonderes Ausführungsbeispiel bezieht sich auf ein Kurzschlussstromelement (SCCD=Short Circuit Current Device).

Die Integration von erneuerbaren Energiequellen und Speichern erfolgt in modernen Gleichspannungsnetzen über geregelte leistungselektronische Wandler. Dasselbe gilt für die Anbindung des Gleichspannungsnetzes an ein Versorgungsnetz. Durch diese Anbindung über geregelte Leistungselektronik werden potenzielle Kurzschlussströme deutlich reduziert. Abgesehen von sehr kurzen Stromimpulsen durch die Entladung von Kondensatoren steigen die Kurzschlussströme nicht deutlich über die Nennströme im Netz. Obwohl dieses Verhalten vorteilhaft für den Komponentenschutz ist, lässt sich die Selektivität von Überstromschutzelementen nur schwer realisieren. So führen Kurzschlussfehler oft entweder zur Fehlauslösung oder zur Nichtauslösung von Sicherungen und Schutzschaltern.

Das Verhalten im Kurzschlussfall von DC-Netzen ist generell bekannt. [1] [2] Bisher wird jedoch für Schutztechnik nur das kritischere Verhalten bei kontinuierlichem und hohem Kurzschlussstrom betrachtet. [3] [4] Hierfür werden für eine optimale Sicherung insbesondere schnell schaltende elektronische Schalter entwickelt [5], die jedoch deutliche Mehrkosten verursachen und bisher kaum verfügbar sind. Klassische thermomechanische Schutzgeräte werden in aktuellen Anwendungen stattdessen häufig eingesetzt und sind preiswerter. Für den Fall eines Gleichspannungsnetzes mit ausschließlich leistungselektronisch angebundenen Komponenten [6] ist jedoch die selektive Auslegung von thermomechanischen Schutzgeräten unter Umständen kaum möglich, was jedoch in der Literatur nicht zu finden ist.

Deshalb besteht der Bedarf nach einem verbesserten Ansatz.

Ausführungsbeispielen der vorliegenden Erfindung liegt die Aufgabe zugrunde, ein Konzept zu schaffen, das die Absicherung von Gleichspannungsnetzen, insbesondere im Kurzschlussfall, verbessert.

Die Aufgabe wird durch den Gegenstand der unabhängigen Patentansprüche gelöst.

Ausführungsbeispiele der vorliegenden Erfindung schaffen ein Kurzschlussstromelement für ein Gleichspannungsnetz, das zumindest einen mit einem Sicherungsgerät abgesicherten Abzweig aufweist. Das Kurzschlussstromelement umfasst eine Diode sowie einen (elektrischen) Energiespeicher. Die Diode ist so angeordnet, dass sie im Normalbetrieb das Gleichspannungsnetz sperrt. Durch das Sperren wird eine Abkopplung des Energiespeichers vom Gleichspannungsnetz erreicht. Der Energiespeicher ist ausgebildet, eine Speicherspannung kleiner als die Netzspannung des Gleichspannungsnetzes bereitzustellen. Beispielsweise wird diese im abgekoppelten Zustand nicht gespeist. Die Diode ist ferner ausgebildet, in einem Störbetrieb des Gleichspannungsnetzes einen Energiefluss aus dem Energiespeicher in das Gleichspannungsnetz und in den Abzweig freizugeben. Gemäß Ausführungsbeispielen wechselt die Diode in einen leitfähigen Zustand, um den Energiefluss freizugeben, wenn die Netzspannung gleich oder kleiner der Speicherspannung des Energiespeichers ist.

Ausführungsbeispielen der vorliegenden Erfindung liegt die Erkenntnis zugrunde, dass durch die Kombination einer beispielsweise in Serie geschalteten Diode und Energiespeichereinheit ein Strom gezielt eingeprägt werden kann, um passive oder thermomechanische Schutzelemente im Kurzschlussfall auszulösen. Hierzu wird entsprechend Ausführungsbeispielen beispielsweise das Kurzschlussstromelement mit den zwei Polen eines Gleichspannungsnetzes verbunden (zwischen die zwei Pole geschaltet). Für den Fall, dass das Gleichspannungsnetz eine ausreichend große Netzspannung (Zustand im Normalbetrieb) aufweist (größer als die Speicherspannung des Energiespeichers), ist die Diode gesperrt, wobei im Falle des Absinkens der Netzspannung, z. B. infolge eines Kurzschlusses (Fehlerfall/Fehlerzustand) in einem Abzweig, die Diode in Flussrichtung betrieben wird , so dass ein zusätzlicher Stromfluss vom Energiespeicher über die Diode in dem Abzweig, insbesondere dem Abzweig mit dem Kurzschluss, erfolgt. Folglich kann ein hoher Kurzschlussstrom für eine ausreichend lange Zeit bereitgestellt werden, um selbst träge Sicherungen des Abzweiges auszulösen. Somit ist es also vorteilhafterweise möglich, mit den vorhandenen Sicherungseinrichtungen in jedem Abzweig ein Auslösen der Sicherungseinrichtung des Abzweiges sicherzustellen, auch wenn die beim initialen Kurzschluss entstehenden Ströme nicht ausreichen würden.

Entsprechend weiteren Ausführungsbeispielen ist das Sicherungsgerät ausgebildet, infolge des Energieflusses von dem Energiespeicher in den Abzweig oder von dem Energiespeicher durch das Sicherungsgerät in den Abzweig auszulösen. Gemäß Ausführungsbeispielen sollte die Spannung $V_{\text{SCCD}}$ des Kurzschlussstromelements groß genug sein, um der Sicherung in jedem Abzweig den notwendigen Auslösestrom $I_{\text{fuse,n}}$ bei gegebenem Widerstand $R_{\text{sc,n}}$ zum Kurzschluss bereitzustellen. Z.B. kann für jeden Abzweig der maximale Kurzschlusswiderstand $R_{\text{sc,n}}$ und der Auslösestrom $I_{\text{fuse,n}}$ durch folgende Formel bestimmt werden:

$$V_{\text{SCCD}} = \max\left(I_{\text{fuse,n}} \cdot R_{\text{sc,n}}\right).$$

Gemäß Ausführungsbeispielen wird eine durch das Kurzschlussstromelement bereitgestellte Energie $E_{\text{SCCD}}$, durch folgende Formel berechnet:

$$E_{\mathrm{SCCD}} = \max\!\left(I_{\mathrm{fuse,n}} \cdot V_{\mathrm{SCCD}} \cdot t_{\mathrm{fuse,n}}\right),$$

mit einem Auslösestrom $I_{\mathrm{fuse,n}}$ und einer Spannung $V_{\mathrm{SCCD}}$ des Kurzschlussstromelements und einer Auslösezeit $t_{\mathrm{fuse,n}}$.

Gemäß Ausführungsbeispielen kann der Energiespeicher einen Kondensator, wie Supercap/Superkondensator und/oder eine Batterie, wie Blei-Säure-Batterie und/oder einen Ackumulator aufweisen. Im Allgemeinen ist es von Vorteil, wenn das Speicherelement einen kleinen Innenwiderstand und hohe Energiedichte aufweist. Das trifft auf die eben genannten Varianten zu, wobei natürlich auch weitere Varianten denkbar wären.

Entsprechend Ausführungsbeispielen ist der Energiespeicher mit der Diode in Serie geschaltet. Beispielsweise kann die Serienschaltung aus Diode und Energiespeicher zwischen dem ersten Pol des Gleichspannungsnetzes und dem zweiten Pol des Gleichspannungsnetzes angeordnet sein, d. h. also dazwischengeschaltet sein.

Entsprechend weiteren Ausführungsbeispielen weist das Kurzschlussstromelement eine Nachladeschaltung auf, die ausgebildet ist, im Normalbetrieb den Energiespeicher aufzuladen oder auf einen definierten Ladezustand zu halten.

Ein weiteres Ausführungsbeispiel schafft ein Gleichspannungsnetz mit zumindest einem mit einem Sicherungsgerät abgesicherten Abzweig sowie des Kurzschlussstromelements. Entsprechend weiteren Ausführungsbeispielen kann das Gleichspannungsnetz natürlich auch mehrere Abzweige aufweisen.

Entsprechend Ausführungsbeispielen weist das Sicherungsgerät eine passive, thermische Überlastsicherung oder mechanischen oder hybriden Schutzschalter auf.

An dieser Stelle sei angemerkt, dass das Kurzschlussstromelement zwischen dem ersten Pol des Gleichspannungsnetzes und dem zweiten Pol des Gleichspannungsnetzes angeordnet ist. Natürlich kann das Kurzschlussstromelement entsprechend weiteren Ausführungsbeispielen auch zwischen dem ersten und zweiten Pol in einem der Abzweige, z. B. auf Seiten des Gleichspannungsnetzes, vorliegen oder mit dem Sicherungsgerät / der Sicherung kombiniert sein.

Ein weiteres Ausführungsbeispiel schafft ein Verfahren zum Absichern eines Gleichspannungsnetzes unter Verwendung des Kurzschlussstromelements. Das Verfahren weist die zwei zentralen Schritte des Sperrens der Diode im Normalzustand bzw. Sperrens der Diode, wenn die Speicherspannung des Energiespeichers kleiner der Netzspannung ist, und des Ausbildens eines Energieflusses aus dem Energiespeicher in das Gleichspannungsnetz und in den Abzweig, wenn ein Störbetrieb des Gleichspannungsnetzes vorliegt oder wenn die Netzspannung kleiner oder gleich der Speicherspannung des Energiespeichers ist, auf.

Entsprechend zusätzlichen Ausführungsbeispielen kann das Verfahren auch noch um den Schritt des Aufladens des Energiespeichers im Normalbetrieb erweitert sein. Ein weiteres Ausführungsbeispiel schafft ein Verfahren mit dem zusätzlichen Schritt des Auslösens einer thermischen, passiven oder mechanischen oder hybriden Sicherungseinrichtung.

Ausführungsbeispiele der vorliegenden Erfindung werden anhand der beiliegenden Zeichnungen erläutert. Es zeigen:

Fig. 1        eine schematische Darstellung einer Stromrichterschaltung gemäß einem Basisausführungsbeispiel;

Fig. 2        ein schematisches Blockschaltbild eines Gleichspannungsnetzes mit leistungselektronischen Wandlern gemäß Ausführungsbeispielen; und

Fig. 3a und 3b        schematische Diagramme zur Illustration des Stromflusses und/oder des Spannungsverlaufes mit und ohne Kurzschlussstromelement.

Bevor nachfolgend Ausführungsbeispiele der vorliegenden Erfindung anhand der beiliegenden Zeichnungen erläutert werden, sei darauf hingewiesen, dass gleichwirkende Elemente und Strukturen mit den gleichen Bezugszeichen versehen sind, so dass die Beschreibung derer aufeinander anwendbar bzw. austauschbar ist.

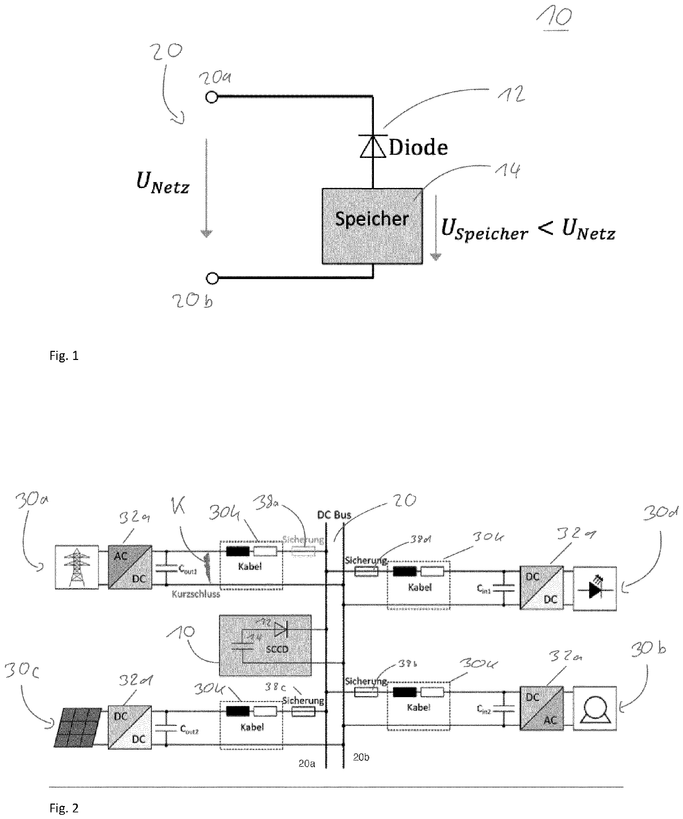

Fig. 1 zeigt ein Kurzschlussstromelement 10 für ein Gleichspannungsnetz 20. Das Kurzschlussstromelement 10 umfasst einen Speicher 14 sowie eine Diode 12. Diode 12 und Speicher 14 sind entsprechend Ausführungsbeispielen in Serie geschaltet. Die Diode 12 ist in diesem Ausführungsbeispiel auf der Seite des Poles 20a, z. B. des Pluspoles des Gleichspannungsnetzes 20, vorgesehen. Der Minuspol ist in diesem Ausführungsbeispiel mit 20b markiert. Wie zu erkennen ist, ist die Diode 12 in Sperrrichtung angeordnet, d. h., dass sie für den Fall des Anlegens einer Spannung zwischen 20a und 20b den Fluss durch selbige sperrt.

Nachdem nun die Struktur erläutert wurde, wird nun die Funktionsweise erläutert.

Im Normalbetrieb ist die Spannung des DC-Netzes $20U_{\mathrm{Netz}}$ größer als die Spannung des Energiespeichers $14U_{\mathrm{Speicher}}$. Die Diode 12 ist so eingebracht, dass sie während des Normalbetriebs sperrt. Eine mögliche Einbindung in ein DC-Netz ist in Fig. 2 dargestellt. Bevor auf die Anwendung eingegangen wird, sei an dieser Stelle angemerkt, dass entsprechend Ausführungsbeispielen natürlich auch mehrere Energiespeicher, z. B. parallel geschaltete Energiespeicher oder auch mehrere Dioden, eingesetzt werden könnten.

Ferner sei angemerkt, dass entsprechend Ausführungsbeispielen die Seriellanordnung zwischen Diode 12 und Speicher 14 noch anders ausgeführt sein kann.

Fig. 2 zeigt einen DC-Bus 20 mit hier vier dargestellten Abzweigen 30a, 30b, 30c und 30d. Der Abzweig 30a ist ein Abzweig zu einem herkömmlichen Wechselspannungsnetz. Der Abzweig 30b ist ein Abzweig zu einem weiteren Wechselspannungselement, wie z. B. einem Generator oder Motor. Der Abzweig 30c ist ein Abzweig mit DC/DC-Wandler 32d, z. B. zum Betreiben einer PV-/Solaranlage. Der Abzweig 30d kann ein andersartiger Gleichspannungsabzweig sein, z.B. zum Betreiben einer LED. Alle Abzweige haben gemein, dass diese ein Sicherungsgerät 38a, 38b, 38c, bzw. 38d sowie Kabel 30k aufweisen. Am Ende jedes Abzweiges ist ein Spannungswandler, wie z. B. ein AC/DC-Wandler 33a (vgl. Abzweige 30a und 30b) bzw. ein DC/DC-Wandler 32d (vgl. Abzweige 30c und 30d) angeordnet. Jeder Wandler im Abzweig weist auf der Gleichspannungsseite auch noch eine Ausgangskapazität $C_{out1}$, $C_{out2}$ (vgl. Abzweige 30a und 30c) bzw. Eingangskapazität $C_{in1}$ und $C_{in2}$ (vgl. Abzweige 30d und 30b) auf. Auf die dahinterliegenden AC- bzw. DC-Verbraucher wird nicht weiter eingegangen.

An dieser Stelle sei angemerkt, dass auch wenn die vier Abzweige 30a-30d erläutert wurden, ein Gleichspannungsnetz mit einem Abzweig 30a (oder 30b/30c/30d) für die Funktion ausreicht. Auch kann der Fehler / Kurzschluss in einem anderen Gleichspannungsabzweig, unabhängig ob mit Wechselspannungs- als auch Gleichspannungs-Quellen bzw. -Lasten vorhanden sind, entstehen und dort unter Zuhilfenahme des jeweiligen Sicherungsgeräts 38b, 38c, 38d im Zusammenwirken mit des Kurzschlussstromelements 10 zuverlässig abgesichert werden. Ferner kann auch die Anzahl der Abzweige 30a-30d beliebig variieren (Minimum: eine Quelle und eine Last).

In dem DC-Netz 20 sind verschiedene leistungselektronische Wandler 32a bzw. 32d in den einzelnen Abzweigen 30a-30d angebunden. In gleicher Weise wie ein Abzweig ist der Stromschutzschalter 10 mit den zwei Polen 20a und 20b des DC-Busses 20 gekoppelt. Das heißt also, dass die Abzweige 30a-30d sowie das Kurzschlussstromelement 10 einander parallelgeschaltet sind.

Im Normalbetrieb sperrt die Diode 12 des Kurzschlussstromelements 10. Somit hat das Kurzschlussstromelement (SCCD) keinen Einfluss auf den Normalbetrieb des Netzes 20. Tritt nun an einem Wandler, hier beispielsweise an dem Wandler 32a des Abzweiges 30a, ein Kurzschluss auf, so entlädt der Kurzschluss die Kondensatoren aller am Netz 20 angeschlossenen Wandler über den DC-Bus 20. Ausgehend von dem Kurzschluss K in dem Abzweig 30a löst idealerweise das Sicherungsgerät 38a des zum Kurzschluss K führenden Abzweigs 30a aus und trennt diesen vom DC-Bus 20. Voraussetzung typischerweise ist, dass der Kurzschlussstrom ausreichend groß ist, wobei das ausreichend sich auf das jeweilige Sicherungsgerät 38a (Sicherung) bezieht.

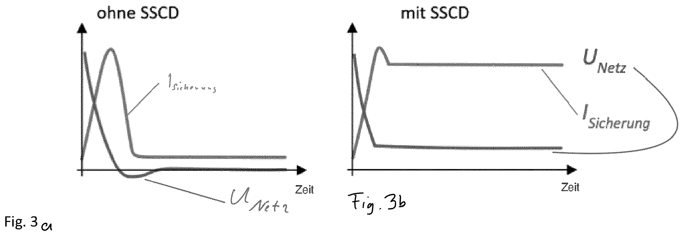

In Fig. 3a ist der Stromverlauf $I_{Sicherung}$ durch das Sicherungsgerät für den Fall dargestellt, dass diese nicht auslöst. Der zugehörige Spannungsverlauf $U_{Netz}$ ist ebenfalls dargestellt. Hintergrund für das Auslösen kann beispielsweise ein nicht ausreichend großer Strom $I_{si-cherung}$ oder z. B. eine träge Sicherung 38a sein; die Ursache ist im Regelfall, dass der Strom nicht ausreichend groß ist (bei einer flinken Sicherung könnte lediglich der erste Puls möglicher-weise für das Auslösen ausreichen). Die Kurzschlussleistung wird aus den anderen Abzweigen 30b, 30c und 30d gespeist, so dass hier möglicherweise schnell auslösende Sicherungen 38b/38c/38d in diesen Abzweigen 30b, 30c und 30d zu Fehlauslösungen führen. In diesem Fall werden nicht fehlerbehaftete Abzweige 30b, 30c und 30d vom DC-Bus fälschlicherweise abgetrennt. Werden andererseits sehr träge Sicherungen verwendet, dann reichen die kurzen Stromimpulse aus den Kondensatoren $C_{out1}$, $C_{out2}$, $C_{in1}$ bzw. $C_{in2}$ bzw. Wandlern 32a-32d nicht zur thermischen Überlast der Sicherung 38a aus (Strom nicht oberhalb des Nennstromes).

Infolgedessen bleibt der Fehler bestehen und der fehlerhafte Abzweig 30a kann nur manuell vom DC-Bus 20 getrennt werden.

Durch die Verwendung des Kurzschlussstromelements 10 verändert sich das Strom- und Spannungsverhalten, so dass Fehlauslösungen vermieden werden können. Der Strom- und Spannungsverlauf mit Kurzschlussstromelement 10 ist in Fig. 3b illustriert. Solange die Spannung $U_{Netz}$ am DC-Bus 20 größer als die Speicherspannung des SCCD 10 ist, entladen sich die Kondensatoren $C_{out1}$, $C_{out2}$, $C_{in1}$ bzw. $C_{in2}$ weiterhin in den Kurzschluss. Dabei sinkt die Netzspannung jedoch auf die Speicherspannung ab, womit die Diode 12 leitfähig wird und den Strom bzw. elektrische Energie, die in dem Element 14 gespeichert ist, in das DC-Netz 20 speist. Bei richtiger Auswahl des Speicherelements 14 kann der Strom den Nennstrom um ein Vielfaches überschreiten. Die Spannung des Kurzschlussstromelements $V_{SCCD}$ sollte gemäß Ausführungsbeispielen groß genug sein, um das Sicherungsgerät in jedem durch das SCCD geschützten Kurzschlusspfad n den notwendigen Auslösestrom $I_{fuse,n}$ bei gegebenem Widerstand $R_{sc,n}$ zum Kurzschluss bereitzustellen. Hierfür wird für jeden Pfad der maximale Kurzschlusswiderstand und der notwendige Auslösestrom bestimmt:

$$V_{SCCD} = \max\left(I_{fuse,n} \cdot R_{sc,n}\right)$$

Da der Kurzschluss K nicht mehr aus den anderen leistungselektronischen Wandlern 32b, 32c und 32d gespeist wird, liegt nur noch das Sicherungsgerät 38a des durch den Kurzschluss K betroffenen Abzweigs 30a im Strompfad. Da das Speicherelement 14 ausreichend Energie bereitstellt, kann der hohe Kurzschlussstrom für eine ausreichend lange Zeit bereitgestellt werden, um träge Sicherungen 38a auszulösen. Dieser Strom ist aber nicht oberhalb des Nennstroms, sodass die anderen Sicherungen 38b, 38c und 38d nicht auslösen. Somit wird die Selektivität des Schutzelements - das Auslösen der richtigen Sicherung bzw. des richtigen Sicherungsgeräts 38a - gewährleistet. Nach dem Abtrennen des kurzschlussbehafteten Abzweigs kann die Netzspannung durch die anderen einspeisenden Wandler wieder auf die Nennspannung ansteigen. Das Netz 20 geht wieder in den Normalbetrieb über und das SCCD 10 wird durch die Diode vom Netz abgekoppelt.

Entsprechend Ausführungsbeispielen kann der Energiespeicher wie folgt ausgeführt sein. Die Aufgabe des Energiespeichers 14 ist es, den Kurzschlussstrom lange genug bereitzustellen, um jedes Sicherungsgerät 38a, 38b, 38c und 38d des Netzes auslösen zu können. Hierbei ist einerseits die Stromamplitude als auch die verfügbare Energiemenge zu beachten. Die Energie $E_{\text{SCCD}}$, die das SCCD bereitstellt, kann - bei vernachlässigbarem Spannungseinbruch durch Entladung - wie folgt berechnet werden:

$$E_{\text{SCCD}} = \max\left(I_{\text{fuse,n}} \cdot V_{\text{SCCD}} \cdot t_{\text{fuse,n}}\right)$$

Hierbei entspricht $t_{\text{fuse,n}}$ der für das Sicherungsgerät notwendigen Auslösezeit bei gegebenem $I_{\text{fuse,n}}$.

Grundsätzlich eignen sich als Speicherelement 14 entweder Kondensatortypen mit kleinen Innenwiderständen und hohen Energiedichten, wie z. B. Superkondensatoren, oder Akkumulatoren, wie beispielsweise Blei-Säure-Batterien. Entsprechend Ausführungsbeispielen ist der Innenwiderstand klein genug, so dass dieser mit einer deutlich geringeren Spannung als die Netzspannung betrieben werden kann, was zu einer Reduktion des Bauvolumens führt. Beispiele für den Innenwiederstand sind:

$$< 100 \text{ m}\Omega \text{ bis hin zu } <10 \text{ m}\Omega \text{ abhängig von dem Nennstrom des Netzes.}$$

Prinzipiell gilt, dass der notwendige Auslösestrom der größten Sicherung multipliziert mit dem Innenwiderstand deutlich kleiner ist als die Netzspannung ist. Nachdem der Auslösestrom vom Nennstrom des Netzes abhängt, bedingt ein leistungsfähigeres Netz einen kleineren Innenwiderstand als ein Netz mit weniger Leistung. Hierbei können sich DC-Netze deutlich unterscheiden. Von Gebäudenetzen mit wenigen Ampere, bis hin zu Schnellladeparks mit über 1 kA.

Entsprechend weiteren Ausführungsbeispielen kann das Kurzschlussstromelement 10 um eine sogenannte Nachladeschaltung erweitert sein, die im Normalbetrieb des DC-Busses 20 den Energiespeicher 14 wiederauflädt.

Bei obigen Ausführungsbeispielen wurde davon ausgegangen, dass als Absicherungseinheiten thermische Überlastsicherung oder mechanische oder hybride Schaltelemente (Schutzschalter) verwendet werden. Andere Schutzschalter sind jedoch auch denkbar. Entsprechend einem Ausführungsbeispiel kann das Kurzschlussstromelement mit einem Schutzschalter kombiniert werden.

Wie oben bereits erläutert, sind technische Anwendungsgebiete von Ausführungsbeispielen DC-Netze (Gleichspannungsnetze), insbesondere im Niederspannungsbereich. Bei weiteren Anwendungsgebieten können auch isolierte Netze, wie z. B. IT-Netze, von Ausführungsbeispielen der Erfindung profitieren.

Wie oben bereits erläutert, können einige Ausführungsbeispiele in Form eines Verfahrens implementiert sein. Eine Beschreibung der Verfahrensschritte stellt auch eine Beschreibung der jeweils zugeordneten Vorrichtung dar. Das geht natürlich auch umgekehrt, dass Aspekte, die im Zusammenhang mit einer Vorrichtung erläutert wurden, auch eine Erläuterung des entsprechenden Verfahrens darstellen.

Literaturverzeichnis

[1] R. Bleilevens und A. Moser, "Simplified Short Circuit Current Calculation for DC Distribution Grids based on a Superposition Approach using Approximated Current Courses," 2020 5th IEEE Workshop on the Electronic Grid (eGRID), 2020.

[2] D. Petropoulos, L. Mackay, L. Ramirez-Elizondo, M. Popov und P. Bauer, "Transient analysis of DC distribution grids," 2017 IEEE Second International Conference on DC Microgrids (ICDCM), 2017.

[3] W. Lujun und W. Yueyang, "Short-circuit current blocking circuit of direct-current power grid". Patent CN107359590A, 31 07 2017.

[4] S. DAI, W. GUO, L. XIAO und Z. ZHANG, "Short-circuit fault current limiter". Patent CN101707365A, 11 25 2009.

[5] C. WANJUN, Z. SHUYI, X. XIAORUI, L. CHAO und Z. BO, "Isolated bidirectional direct-current solidstate circuit breaker based on cathode short-circuit grid-control thyristor". Patent CN112311366A, 10 23 2020.

[6] J. Kaiser, K. Gosses, L. Ott, Y. Han, B. Wunder, M. März und R. Weiss, "Grid behavior under fault situations in ±380 VDC distribution systems," 2017 IEEE Second International Conference on DC Microgrids (ICDCM), 2017.

[7] A. Kulka und T. Underland, "Grid Inductance Estimation by Reactive Power Perturbation," Nordic Workshop on Power and Industrial Electronics, 11 06 2008.

[8] A. Timbus, R. Teodorescu und F. Blaabjerg, "Online Grid Impedance Measurement Suitable for Multiple PV Inverters Running in Parallel," Twenty-First Annual IEEE Applied Power Electronics Conference and Exposition, 2006.

Bezugszeichen

Kurzschlussstromelement (10)
Diode (12)
Energiespeicher (14)
Sicherung (38a, 38b, 38c, 38d)
Gleichspannungsnetz (20)
Pol (20a, 20b)
Netzspannung ($U_{Netz}$)
Speicherspannung ($U_{Speicher}$)
Abzweig (30a, 30b, 30c, 30d)

**Patentansprüche**

1. Kurzschlussstromelement (10) für ein Gleichspannungsnetz (20), das zumindest einen mit einem Sicherungsgerät (38a, 38b, 38c, 38d) abgesicherten Abzweig (30a, 30b, 30c, 30d) aufweist;

    wobei das Kurzschlussstromelement (10) eine Diode (12) sowie einen Energiespeicher (14) umfasst,
    wobei die Diode (12) so angeordnet ist, dass sie im Normalbetrieb des Gleichspannungsnetzes (20) sperrt,
    wobei der Energiespeicher (14) ausgebildet ist, eine Speicherspannung ($U_{Speicher}$) kleiner als die Netzspannung ($U_{Netz}$) des Gleichspannungsnetzes (20) bereitzustellen;
    wobei die Diode (12) ferner ausgebildet ist, in einem Störbetrieb des Gleichspannungsnetzes (20) einen Energiefluss aus dem Energiespeicher (14) in das Gleichspannungsnetz (20) und in den Abzweig (30a, 30b, 30c, 30d) freizugeben.

2. Kurzschlussstromelement (10) gemäß Anspruch 1, wobei die Diode (12) in einen leitfähigen Zustand wechselt, um den Energiefluss freizugeben, wenn die Netzspannung ($U_{Netz}$) gleich oder kleiner der Speicherspannung ($U_{Speicher}$) des Energiespeichers (14) ist.

3. Kurzschlussstromelement (10) gemäß einem der vorherigen Ansprüche, wobei das Sicherungsgerät (38a, 38b, 38c, 38d) ausgebildet ist, infolge des Energieflusses von dem Energiespeicher (14) in den Abzweig (30a, 30b, 30c, 30d) oder von dem Energiespeicher (14) durch das Sicherungsgerät (38a, 38b, 38c, 38d) in den Abzweig (30a, 30b, 30c, 30d) auszulösen.

4. Kurzschlussstromelement (10) gemäß einem der vorherigen Ansprüche, wobei der Energiespeicher (14) einen Kondensator, insbesondere einen Superkondensator und/oder einen Akkumulator, insbesondere eine Blei-Säure-Batterie, aufweist.

5. Kurzschlussstromelement (10) gemäß einem der vorherigen Ansprüche, wobei der Energiespeicher (14) und die Diode (12) in Serie geschaltet sin; und/oder

wobei die Serienschaltung aus Diode (12) und Energiespeicher (14) zwischen dem ersten Pol (20a, 20b) des Gleichspannungsnetzes (20) und dem zweiten Pol (20a, 20b) des Gleichspannungsnetzes (20) angeordnet ist.

6. Kurzschlussstromelement (10) gemäß einem der vorherigen Ansprüche, wobei das Kurzschlussstromelement (10) eine Nachladeschaltung aufweist, die ausgebildet ist, im Normalbetrieb den Energiespeicher (14) aufzuladen.

7. Kurzschlussstromelement (10) gemäß einem der vorherigen Ansprüche, wobei eine Spannung $V_{SCCD}$ des Kurzschlussstromelements (10) groß genug ist, um das Sicherungsgerät (38a) in jedem Abzweig (30a-30d) den notwendigen Auslösestrom $I_{fuse,n}$ bei gegebenem Widerstand $R_{sc,n}$ zum Kurzschluss bereitzustellen, und/oder wobei für jeden Abzweig (30a-30d) der maximale Kurzschlusswiderstand $R_{sc,n}$ und der Auslösestrom $I_{fuse,n}$ durch folgende Formel bestimmt wird:

$$V_{SCCD} = \max\left(I_{fuse,n} \cdot R_{sc,n}\right).$$

8. Kurzschlussstromelement (10) gemäß einem der vorherigen Ansprüche, wobei eine durch das Kurzschlussstromelement (10) bereitgestellte Energie $E_{SCCD}$, durch folgende Formel berechnet wird:

$$E_{SCCD} = \max\left(I_{fuse,n} \cdot V_{SCCD} \cdot t_{fuse,n}\right),$$

mit einem Auslösestrom $I_{fuse,n}$ und einer Spannung $V_{SCCD}$ des Kurzschlussstromelements (10) und einer Auslösezeit $t_{fuse,n}$.

9. Gleichspannungsnetz (20) mit zumindest einem mit einem Sicherungsgerät (38a, 38b, 38c, 38d) abgesicherten Abzweig (30a, 30b, 30c, 30d) sowie einem Kurzschlussstromelement (10) gemäß einem der vorherigen Ansprüche.

10. Gleichspannungsnetz (20) gemäß Anspruch 9, wobei das Sicherungsgerät (38a, 38b, 38c, 38d) eine passive oder thermische Überlastsicherungseinrichtung und/oder einen mechanischen oder hybriden Schutzschalter aufweist.

11. Gleichspannungsnetz (20) gemäß Anspruch 9 oder 10, wobei das Kurzschlussstromelement (10) zwischen dem ersten Pol (20a, 20b) des Gleichspannungsnetzes (20) und dem zweiten Pol (20a, 20b) des Gleichspannungsnetzes (20) angeordnet ist.

12. Verfahren zum Absichern eines Gleichspannungsnetzes (20), unter Verwendung eines Kurzschlussstromelements (10) gemäß Anspruch 1, mit folgenden Schritten:

Sperren der Diode (12) im Normalzustand oder Sperren der Diode (12), wenn die Speicherspannung ($U_{Speicher}$) des Energiespeichers (14) kleiner der Netzspannung ($U_{Netz}$) ist; und
Ausbilden eines Energieflusses aus dem Energiespeicher (14) in das Gleichspannungsnetz (20) und in den Abzweig (30a, 30b, 30c, 30d), wenn ein Störbetrieb des Gleichspannungsnetzes (20) vorliegt oder wenn die Netzspannung ($U_{Netz}$) kleiner oder gleich der Speicherspannung ($U_{Speicher}$) des Energiespeichers ist.

13. Verfahren gemäß Anspruch 12, das ferner den Schritt des Aufladens des Energiespeichers (14) im Normalbetrieb aufweist.

14. Verfahren gemäß Anspruch 12 oder 13, das ferner den Schritt des Auslösens einer thermischen oder passiven oder mechanischen oder hybriden Sicherungseinrichtung aufweist.

Fig. 1

Fig. 2

ohne SSCD

$I_{Sicherung}$

Zeit

$U_{Netz}$

Fig. 3a

mit SSCD

$U_{Netz}$

$I_{Sicherung}$

Zeit

Fig. 3b

Europäisches
Patentamt

European
Patent Office

Office européen
des brevets

**EUROPÄISCHER RECHERCHENBERICHT**

Nummer der Anmeldung

**EP 23 18 3150**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 675 301 A1 (SIEMENS AG [DE]) 1. Juli 2020 (2020-07-01) * das ganze Dokument * ----- | 1-14 | INV. H02H3/05 H02H7/26 H02J1/12 |
| X | CN 113 224 733 B (UNIV TIANJIN) 14. Juni 2022 (2022-06-14) | 1,2,4-6, 10-14 | ADD. |
| A | * das ganze Dokument * ----- | 3,7,8 | H02H3/087 |

RECHERCHIERTE SACHGEBIETE (IPC)

H02J
H02H

Der vorliegende Recherchenbericht wurde für alle Patentansprüche erstellt

| Recherchenort | Abschlußdatum der Recherche | Prüfer |
|---|---|---|
| München | 19. Dezember 2023 | Trifonov, Antoniy |

EPO FORM 1503 03.82 (P04C03)

**EP 4 489 241 A1**

## ANHANG ZUM EUROPÄISCHEN RECHERCHENBERICHT
## ÜBER DIE EUROPÄISCHE PATENTANMELDUNG NR.

EP 23 18 3150

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-12-2023

| Im Recherchenbericht angeführtes Patentdokument | Datum der Veröffentlichung | Mitglied(er) der Patentfamilie | | Datum der Veröffentlichung |
|---|---|---|---|---|
| EP 3675301 A1 | 01-07-2020 | CN | 113302812 A | 24-08-2021 |
| | | EP | 3675301 A1 | 01-07-2020 |
| | | EP | 3874571 A1 | 08-09-2021 |
| | | US | 2022102967 A1 | 31-03-2022 |
| | | WO | 2020136017 A1 | 02-07-2020 |
| CN 113224733 B | 14-06-2022 | CN | 113224733 A | 06-08-2021 |
| | | US | 2022311241 A1 | 29-09-2022 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 107359590 A, W. Lujun und W. Yueyang
- CN 101707365 A, S. DAI, W. GUO, L. XIAO und Z. ZHANG
- CN 112311366 A, C. WANJUN, Z. SHUYI, X. XIAORUI, L. CHAO und Z. BO

**In der Beschreibung aufgeführte Nicht-Patentliteratur**

- **R. BLEILEVENS** ; **A. MOSER**. Simplified Short Circuit Current Calculation for DC Distribution Grids based on a Superposition Approach using Approximated Current Courses. *2020 5th IEEE Workshop on the Electronic Grid (eGRID)*, 2020
- **D. PETROPOULOS** ; **L. MACKAY** ; **L. RAMIREZ-ELIZONDO** ; **M. POPOV** ; **P. BAUER**. Transient analysis of DC distribution grids. *2017 IEEE Second International Conference on DC Microgrids (ICDCM)*, 2017
- **J. KAISER** ; **K. GOSSES** ; **L. OTT** ; **Y. HAN** ; **B. WUNDER** ; **M. MÄRZ** ; **R. WEISS**. Grid behavior under fault situations in $\pm$380 VDC distribution systems. *2017 IEEE Second International Conference on DC Microgrids (ICDCM)*, 2017
- **A. KULKA** ; **T. UNDERLAND**. Grid Inductance Estimation by Reactive Power Perturbation. *Nordic Workshop on Power and Industrial Electronics*, 06 November 2008
- **A. TIMBUS** ; **R. TEODORESCU** ; **F. BLAABJERG**. Online Grid Impedance Measurement Suitable for Multiple PV Inverters Running in Parallel. *Twenty-First Annual IEEE Applied Power Electronics Conference and Exposition*, 2006